# EUROPÄISCHE PATENTSCHRIFT

(11) **EP 3 709 014 B1**
(45) Veröffentlichungstag und Bekanntmachung des Hinweises auf die Patenterteilung: **20.11.2024**
(21) Anmeldenummer: 20162507.6
(22) Anmeldetag: 11.03.2020
(51) Int. Cl.: G01N 29/04, G01N 29/26, G01N 29/22

(54) **ULTRASCHALL-PRÜFKOPFSYSTEM UND PRÜFVERFAHREN**
ULTRASONIC INSPECTION HEAD SYSTEM AND INSPECTION METHOD
SYSTÈME DE TÊTE D'INSPECTION À ULTRASONS ET PROCÉDÉ D'INSPECTION

(30) Priorität: 13.03.2019 DE 102019106427
(43) Veröffentlichungstag der Anmeldung: 16.09.2020
(73) Patentinhaber: Bundesrepublik Deutschland, vertreten durch den Bundesminister für Wirtschaft und Energie, 12205 Berlin (DE)
(72) Erfinder: BOEHM, Rainer, 15848 Rietz-Neuendorf (DE); HECKEL, Thomas, 14532 Kleinmachnow (DE)
(74) Vertreter: Zimmermann & Partner Patentanwälte mbB

(56) Entgegenhaltungen:
- EP-A1- 0 722 085
- GB-A- 2 426 340
- US-A- 3 745 813
- US-A- 3 771 354
- US-A- 4 576 045
- US-A- 4 694 700
- US-A1- 2005 146 247
- US-A1- 2012 227 502
- US-A1- 2013 047 729
- US-A1- 2013 111 997
- US-A1- 2015 087 988
- US-A1- 2015 343 492

## Beschreibung

Die vorliegende Erfindung betrifft ein Ultraschallprüfkopfsystem sowie Prüfverfahren zum Erfassen von Fehlstellen in einem Material, insbesondere in Schienen.

Für die zerstörungsfreie Überprüfung von Materialien hat sich die Ultraschallprüfung bewährt, insbesondere im Volumen und an unzugänglichen Oberflächen. Dazu wird ein Ultraschallwandler, der Ultraschallimpulse aussenden und empfangen kann, über eine zugängliche Oberfläche des zu prüfenden Materials geführt, wobei sich für gewöhnlich ein Koppelmedium wie Wasser oder Öl zwischen dem Ultraschallwandler und der Oberfläche des Materials befindet. Ein angeschlossenes Gerät erzeugt die elektrischen Sendeimpulse und empfängt die elektrischen Signale vom Ultraschallwandler, die dort entstehen, wenn ihn ein zum Beispiel an der Rückwand oder einer Fehlstelle des Materials reflektierte oder gestreute Echo erreicht. Das Signal kann zum Beispiel in Form des Zeitverlaufs der Amplitude dargestellt werden. Für die Überprüfung von verlegten Eisenbahnschienen werden insbesondere Schienenprüfzüge verwendet, die eine Vielzahl von Ultraschallprüfköpfen aufweisen, die die Schienen abrastern. Durch eine Vielzahl von Einschallrichtungen von verschiedenen Punkten aus wird versucht, möglichst viele Fehler zu detektieren.

Eine Entwicklung der Ultraschalltechnik ist die Phased-Array-Technik oder auch Gruppenstrahler-Technik, bei der mehrere verschiedene Winkel mit einem Phased-Array-Prüfkopf realisiert werden können. Die Phased-Array-Technik stellt im Allgemeinen hohe Anforderungen an die Gerätetechnik und erfordert längere Prüfzeiten im Vergleich zur Prüfung mit mehreren parallel arbeitenden Festwinkelprüfköpfen.

US 2015/087988 A1 beschreibt ein Ultraschall-Wandler-Array. US 4 694 700 A beschreibt Ultraschallsensoren für elektronisch sektorales Scannen. US 4 576 045 A beschreibt ein Weit-Apertur-Ultraschallscanner mit konvexem Wandlerarray. US 2005 / 146247 A1 beschreibt ein gebogenes micromaschinelles Ultraschallwandler-Array und dessen Herstellungsmethode. US 2015 / 343492 A1 beschreibt ein piezoelektrisches Wandlergerät mit Linsenstrukturen. US 3 771 354 A beschreibt einen schnellen Ultraschall-Inspektions-Apparat. EP 0 722 085 A1 beschreibt eine Ultraschallprüfvorrichtung. US 2012 / 227502 A1 beschreibt ein Multisensor-Schinen-Scan/Encoder-System sowie die Methode dessen Nutzung. US 2013 / 047729 A1 beschreibt einen Apparat zum Detektieren von Defekten. US 2013 / 111997 A1 beschreibt eine Methode und einen Apparat zum Detektieren interner Schienendefekte. US 3 745 813 A beschreibt ein Ultraschall-Inspektions-Roll-System. GB 2 426 340 A beschreibt eine Methode zum Detektieren von Positionen von Defekten in Schienen.

Die vorliegende Erfindung beschreibt ein vereinfachtes Ultraschall-Prüfkopfsystem und ein verbessertes Prüfverfahren zum Erfassen von Fehlstellen in einem Material, insbesondere in Schienen. Des Weiteren werden Wandler sowie Wandleranordnungen für ein Ultraschall-Prüfkopfsystem vorgestellt, die dessen vereinfachten Aufbau und effektive Funktionsweise begünstigen.

Die Wandler ermöglichen beispielsweise einen hohen Energieeintrag in das zu prüfende Material sowie das Abdecken mehrerer Einschallwinkel gleichzeitig. Da ein Fehler im Material nur nachgewiesen werden kann, wenn sein Echo auch empfangen wird, ist zudem die geometrische Anordnung zwischen Sender, Empfänger und dem Fehler entscheidend. Die erfindungsgemäße Wandleranordnung erlaubt das gleichzeitige Abdecken mehrerer Einschallwinkel und verhindert weitestgehend eine Überlagerung von Schallwellen, die von verschiedenen Wandlern ins Material eingekoppelt werden. Die Wandleranordnung kann zudem in nur einem bzw. in wenigen Prüfköpfen untergebracht werden und bedingt damit einen deutlich vereinfachten Aufbau des erfindungsgemäßen Ultraschallprüfkopfsystems im Vergleich zu konventionellen Ultraschall-Systemen, ohne dass dabei weniger Prüfwinkel bei der Prüfung eines Materials berücksichtigt werden.

Das erfindungsgemäße Prüfverfahren zum Erfassen von Fehlstellen in einem Material kann bereits mit einer geringen Anzahl an Wandlerelementen realisiert werden und erlaubt daher auch den Einsatz der Wandler, der Wandleranordung und/oder des erfindungsgemäßen Ultraschallprüfkopfsystems, die ebenfalls jeweils bereits mit einer Anzahl von mindestens drei Wandlerelementen funktionstüchtig sind. Durch das erfindungsgemäße Prüfverfahren kann zudem eine verbesserte Ergebnisdarstellung realisiert werden.

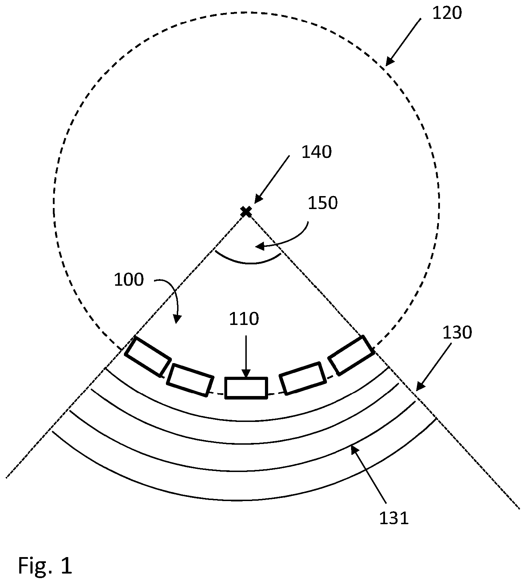

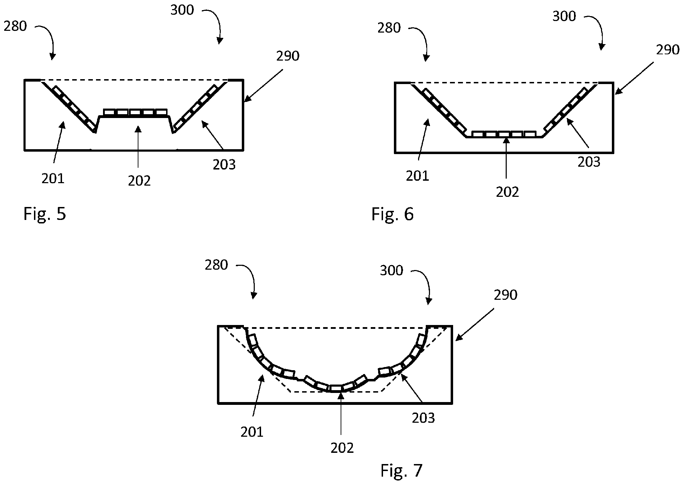

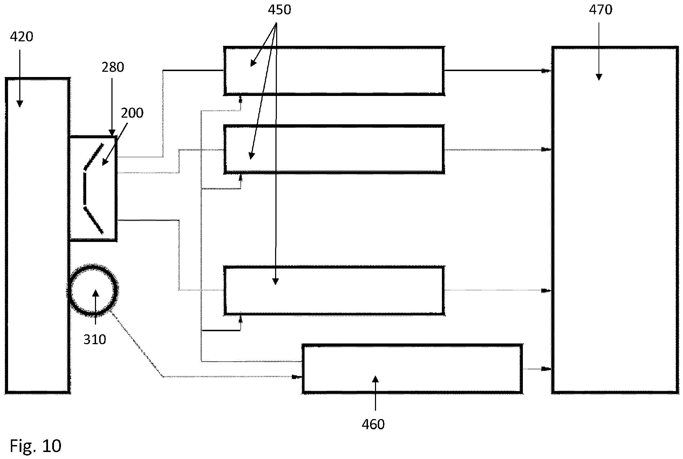

Die beanspruchte Erfindung ist im unabhängigen Anspruch 1 definiert und kann am besten durch Figur 7 veranschaulicht werden. Weitere Aspekte und bevorzugte Ausführungsformen sind in den übrigen Ansprüchen definiert. Aspekte, Ausführungsformen und Beispiele der vorliegenden Offenbarung, die nicht von den beigefügten Ansprüchen umfasst sind, sind nicht Teil der beanspruchten Erfindung und werden zu Illustrationszwecken angegeben. Die Figuren 1 bis 6 sowie die Figuren 8 bis 10 zeigen nicht alle Merkmale der beanspruchten Erfindung.

Im Folgenden werden Ausführungsformen und Aspekte der Erfindung mit Bezug auf die Figuren genauer erläutert. In den Figuren wird gezeigt:
Fig. 1 zeigt beispielhaft eine schematische Ansicht eines Wandlers mit 5 Wandlerelementen;
Fig. 2, 3 und 4 zeigen jeweils eine schematische Ansicht der Wandleranordnung einer Ausführungsform;
Fig. 5, 6 und 7 zeigen jeweils eine schematische Ansicht der Wandleranordnung in einem Prüfkopf in einer Ausführungsform; Fig. 7 zeigt eine erfindungsgemäße Ausführungsform; Fig. 8 zeigt beispielhaft eine schematische Ansicht einer virtuellen Vergrößerung einer Anzahl von Wandlerelementen;
Fig. 9 zeigt eine schematische Ansicht eines Prüfkopfs in einer Ausführungsform;
Fig. 10 zeigt ein Blockschaltbild eines Mehrkanalsystems zur Steuerung eines Ultraschallprüfkopfsystems.

Abbildung 1 zeigt eine Ausführungsform eines Wandlers 100 mit 5 Wandlerelementen 110, die auf einem Kreisbogen eines virtuellen Kreises 120 angeordnet sind. Die Wandlerelemente 110 bilden somit ein gekrümmtes Lineararray (1D-Array). Die Wandlerelemente 110 dienen dem Senden und Empfangen von Schallwellen und können insbesondere Ultraschallwandlerelemente wie beispielsweise Piezoelemente sein. Die Anordnung der Wandlerelemente 110 wird so gestaltet, dass sich die von den Wandlerelementen 110 ausgesandten Schallwellen derart überlagern, dass sie einen Sektor einer Elementarwelle 130 approximieren, deren virtuelle Punktquelle 140 im Mittelpunkt des virtuellen Kreises 120 liegt. Unter einer Elementarwelle wird dabei eine sich von einem Punkt aus nach allen Seiten hin ausbreitende Kreis- oder Kugelwelle verstanden. Der Wandler 100 ahmt somit einen Teil einer konzentrischen Wellenfront einer Punktquelle nach, die sich beabstandet befände, und erzeugt seinerseits einen Sektor konzentrischer Wellenfronten 131, die den konzentrischen Wellenfronten der Punktquelle in einem noch größeren Abstand von der Punktquelle entsprechen würden.

Der Vorteil dieser Anordnung an Wandlerelementen 110 besteht darin, dass der Wandler 100 im Gegensatz zu einer tatsächlich realisierbaren annähernd punktförmigen Schallquelle eine höhere Energiedichte erzeugen kann. Die Energie einer Elementarwelle verteilt sich mit zunehmendem Abstand zur Punktquelle auf eine immer größere Fläche, die Energiedichte bzw. Leistungsdichte nimmt dabei mit dem reziproken Abstandsquadrat 1/*r*² ab. Das heißt, dass sich zum Beispiel mit der Verdopplung der Entfernung zur Punktquelle (zum Sender) die Leistungsdichte auf ein Viertel des ursprünglichen Wertes reduziert wird.

Durch das Approximieren einer virtuellen Punktquelle ermöglicht der Wandler 100 gleichzeitig allerdings auch die Anwendung einfacher Algorithmen, die für gewöhnlich punktförmigen Wandlern vorbehalten sind. Insbesondere ermöglicht der erfindungsgemäße Wandler die Verwendung des SAFT-Algorithmus, bei dem nur wenige zusätzliche Parameter Berücksichtigung finden müssen.

Der SAFT-Algorithmus geht normalerweise nur von ein oder zwei kleinen Wandlerelementen aus, deren Ortskoordinaten bekannt sind, je nachdem, ob es sich um eine monostatische oder eine bistatische Anordnung handelt. Der erfindungsgemäße Wandler 100 erlaubt den Einsatz eines adaptierten SAFT-Algorithmus, in den beispielsweise der Abstand des Wandlers 100 von der virtuellen Punktquelle 140 mit einfließt sowie die Intensitätsabnahme. Gleichzeitig kann mit dem Wandler 100 eine höhere Energiedichte bzw. Intensität in ein Material geschallt werden, als dies eine einzelne Punktquelle erlauben würde. Daraus resultiert eine stärkere Anregung und Antwort des beschallten Materials.

Um den Sektor der Elementarwelle 130 approximieren zu können, sollte der Wandler mindestens drei Wandlerelemente 110 aufweisen, wobei die Annäherung an eine Elementarwelle mit Punktquelle umso genauer wird, desto mehr Wandlerelemente 110 der Wandler aufweist. Da in der Praxis allerdings jedes Wandlerelement im Empfangsfall, wenn also das Echo der ausgesandten Schallwellen wieder empfangen wird, einen Datensatz produzieren wird, ist es sinnvoll, die Anzahl der Wandlerelemente 110 begrenzt zu halten und bevorzugt nicht mehr als 16 Wandlerelemente 110 für den Wandler zu verwenden. Besonders bevorzugt weist der Wandler 5 bis 10 Wandlerelemente 110 auf. Insbesondere haben sich 7 Wandlerelemente 110 als besonders vorteilhaft erwiesen, da 7 Wandlerelemente in der Lage sind, den Sektor der Elementarwelle 130 relativ gut zu approximieren und gleichzeitig ein möglicher erzeugter Datensatz sowie der Aufwand für die Gerätetechnik noch überschaubar bleiben.

Durch die Anordnung der Wandlerelemente 110 des erfindungsgemäßen Wandlers 100 divergiert das entsandte Schallfeld in der von der virtuellen Punktquelle 140 abgewandten Richtung, wodurch eine "natürliche" Defokussierung des entsandten Schallfeldes bezogen auf ihre geometrische Appertur stattfindet. Eine Punktquelle ist in der Regel divergent und hat keinen Fokus. Eine auf einen Raumwinkel begrenzte Anordnung von Quellen (begrenzter Halbstrahler) hat hingegen immer einen natürlichen Fokuspunkt aufgrund der geometrischen Abmessung und der abgestrahlten Wellenlänge. Die Anordnung der Wandlerelemente mit der Approximation einer (raumwinkelbegrenzten) Elementarwelle wirkt der natürlichen Fokussierung entgegen, womit der natürliche Fokus in Richtung des Schallfeldes einer Punktquelle (ungerichtet) "defokussiert". Die Defokussierung, also Verbreiterung des Schallfeldes (mit dem Ziel eine quasi raumwinkelbegrenzten Elementarwelle zu erzeugen), ermöglicht einen breiteren Winkelbereich in einem Material, das sich in der von der virtuellen Punktquelle 140 abgewandten Richtung befindet, zu beschallen und zu prüfen. Eine zusätzliche Schallfeldverbreiterung (Optimierung der quasi raumwinkelbegrenzten Elementarwelle) kann durch ein verzögertes (elektronisches) Ansteuern der einzelnen Wandlerelemente 110 des Wandlers 100 erreicht werden, sodass die einzelnen Schallwellen geringfügig verzögert ausgesendet werden. Zur Verbreiterung des Schallfeldes sollten die äußersten Wandlerelemente des Wandlers hierfür die größte Verzögerung erfahren, während die Verzögerungswerte zur Mitte des Wandlers 100 hin abnehmen.

Ein verzögertes Ansteuern der einzelnen Wandlerelemente 110 kann zudem dazu verwendet werden, einzelne Laufzeitkorrekturen herbeizuführen, um insbesondere herstellungsbedingte oder materialtechnische Variationen auszugleichen (individuelle Laufzeit-/Phasenkorrektur zum Ausgleich von Produktionsungenauigkeiten). Durch eine relative Verzögerungsbelegung der Sendeimpulse zueinander (im Bereich der Kohärenzlänge des Sendeimpulses) können die Eigenschaften des vom erfindungsgemäßen Wandler 100 erzeugten Schallfeldes beim Senden verbessert werden, sodass zum Beispiel auch nicht ideal kreisbogenförmig angeordnete Wandlerelemente 110 einen Sektor einer Elementarwelle 130 effizient approximieren.

Prinzipiell können auch die Wandlerelemente 110 selbst eine gebogene Form aufweisen, um die Anordnung auf dem Kreisbogen zu optimieren.

Um einen bestimmten Winkelbereich in einem Material abzudecken, muss die Brechung an etwaigen Grenzflächen (z.B. zwischen Stahl, Koppelmedium und Acrylglas) berücksichtigt werden sowie die Ausrichtung des Wandlers selbst. Auch die Anordnung der Wandlerelemente auf dem Kreisbogen ist relevant. Der Kreisbogen wird durch die äußersten Kanten des Wandlers begrenzt und definiert einen Mittelpunktswinkel 150, wie er in Fig. 1 beispielhaft dargestellt ist. Der Mittelpunktswinkel 150 des Kreisbogens kann je nach gewünschtem Winkelbereich im Material, der beschallt werden soll, der Ausrichtung des Wandlers 100 und den zu berücksichtigenden Brechungen variieren, beträgt vorzugsweise aber nicht weniger als 15° und nicht mehr als 80°, besonders bevorzugt nicht weniger als 20° und nicht mehr als 70°, ganz besonders bevorzugt nicht weniger als 25° und nicht mehr als 40°.

Ein weiterer Aspekt der Erfindung ist eine Wandleranordnung 200 für ein Ultraschall-Prüfkopfsystem, die einen ersten, einen zweiten und einen dritten Wandler 201, 202, 203 zum Senden und Empfangen von Schallwellen umfasst, wobei jeder der Wandler mindestens drei Wandlerelemente 210 aufweist.

Die erfindungsgemäße Wandleranordnung lässt sich im Querschnitt anhand eines virtuellen Trapezes 260 veranschaulichen, wobei das virtuelle Trapez 260 unterschiedlich lange Grundseiten sowie nicht-parallele Schenkel aufweist. In einer vorteilhaften Ausführungsform weisen die Innenwinkel 270 an der kürzeren Grundseite des virtuellen Trapezes 260 jeweils einen Betrag von 95° bis 175°, besonders bevorzugt von 100° bis 170°, ganz besonders bevorzugt von 110° bis 165° auf. Bevorzugt ist zudem, dass das virtuelles Trapez 260 ein gleichschenkliges Trapez ist.

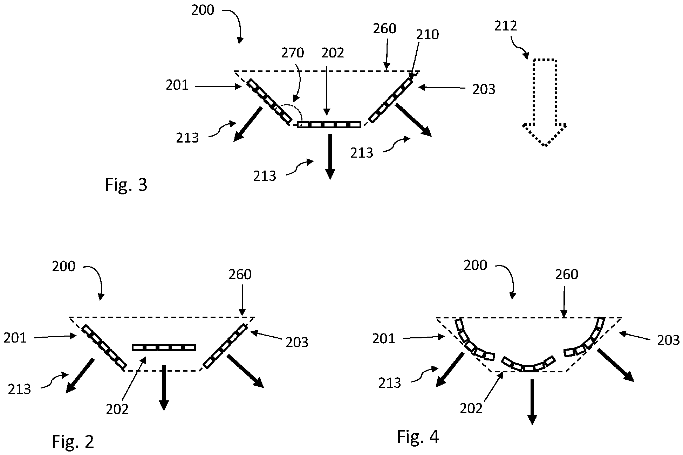

Wie beispielhaft in Fig. 2, 3 und 4 gezeigt, sind die Wandlerelemente jedes Wandlers zu einem Lineararray angeordnet, wobei das Lineararray zum Beispiel gerade, wie in Fig. 2 und 3 gezeigt, oder auch gekrümmt sein kann, wie beispielhaft in Fig. 4 dargestellt. Die Wandlerelemente des zweiten Wandlers 202 sind im Querschnitt im Wesentlichen entlang einer Geraden angeordnet, die parallel zu den Grundseiten des virtuellen Trapezes 260 ist. Die Wandlerelemente des ersten und des dritten Wandlers 201, 203 sind hingegen im Wesentlichen entlang der Schenkel des virtuellen Trapezes 260 angeordnet.

Die Anordnung der Wandlerelemente 210 eines Wandlers entlang bzw. im Wesentlichen entlang einer virtuellen Linie, d.h. der Geraden oder der Schenkel, beschreibt dabei insbesondere die Längsrichtung des jeweiligen Wandlers, also des Lineararrays, d.h. die Richtung, in die sich die Wandlerelemente eines Wandlers aneinanderreihen. Die Formulierung "im Wesentlichen entlang einer Geraden" bzw. "im Wesentlichen entlang der Schenkel" ist also nicht so zu verstehen, dass alle Wandlerelemente eines Wandlerelements direkt auf der Geraden bzw. den Schenkeln liegen müssen. Beispielsweise bei einem gekrümmten Lineararray können die Schenkel des virtuellen Trapezes 260 auch jeweils einer Tangente an der Mitte eines Kreisbogens entsprechen, auf dem die Wandlerelemente 210 des ersten und dritten Wandlers 201, 203 angeordnet sind, und die Gerade kann einer Tangente an der Mitte eines Kreisbogens entsprechen, auf dem die Wandlerelemente 210 des zweiten Wandlers 202 angeordnet sind. Bei einer ungeraden Anzahl an rechteckig geformten Wandlerelementen würde so beispielsweise das mittlere Wandlerelement auf der virtuellen Linie liegen. Im Falle eines geraden linearen Wandlers (gerades Lineararray), wie beispielsweise in Fig. 2 und 3 dargestellt, können die Wandlerelemente direkt auf der jeweiligen virtuellen Linie liegen, den Fall des gekrümmten linearen Wandlers (gekrümmtes Lineararray) zeigt Fig. 4 beispielhaft.

Das virtuelle Trapez dient als Hilfslinie zur Beschreibung der Wandleranordnung und sollte in einem realistischen Rahmen ausgelegt werden, sodass beispielsweise die Länge der Schenkel des virtuellen Trapezes in etwa der Länge des ersten und dritten Wandlers und die Länge der kürzeren Grundseite in etwa der Länge des zweiten Wandlers (vgl. Fig. 2, 3 und 4) entspricht, um zum Beispiel eine unnötige Vergrößerung des benötigten Bauraums für die Wandleranordnung auszuschließen.

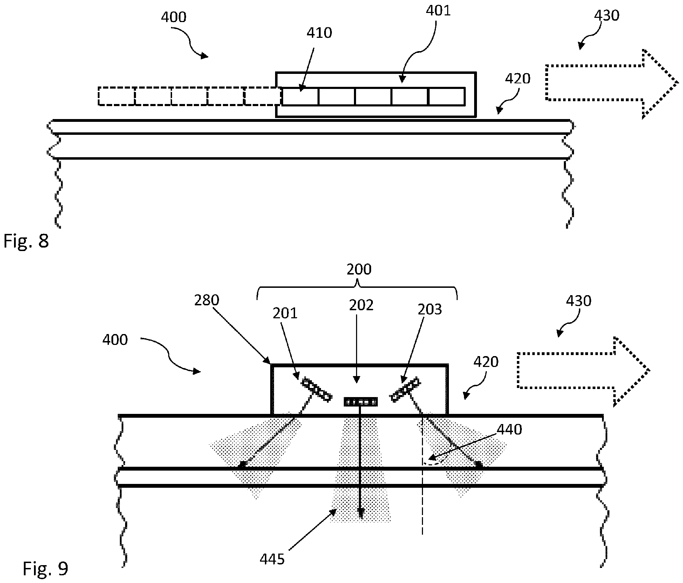

Die Wandler 201, 202, 203 schallen im Allgemeinen in eine Normalenrichtung wie sie beispielhaft in Fig. 2, 3 und 4 als Schallrichtung 213 dargestellt ist. Das heißt, die Wandler schallen im Wesentlichen senkrecht zu ihrer Längsrichtung, wobei jede Normalenrichtung in der Realität von einem breiteren Schallfeld umgeben ist, wie beispielsweise in Fig. 9 angedeutet. Die Wandler 201, 202, 203 sind bevorzugt jeweils derart ausgerichtet, dass sie ganz oder zumindest teilweise in eine Richtung 212 schallen können, die von der längeren Grundseite des virtuellen Trapezes zur kürzeren Grundseite des virtuellen Trapezes 260 verläuft. Wenn der zweite Wandler 202 im Wesentlichen entlang der kürzeren Grundseite des virtuellen Trapezes 260 angeordnet ist, hieße das beispielsweise, dass der erste, zweite und der dritte Wandler 201, 202, 203 jeweils vom Inneren des virtuellen Trapezes 260 wegschallen. Eine Oberfläche eines zu prüfenden Materials befände sich dann insbesondere gegenüber der kürzeren Grundseite des virtuellen Trapezes 260.

Der zweite Wandler 202 kann entlang einer Längsrichtung des Querschnitts sowohl vor dem ersten Wandler 201, zwischen dem ersten und dritten Wandler 201, 203 als auch nach dem dritten Wandler 203 angeordnet sein. Um in einer späteren Anwendung der Wandleranordnung den Bauraum, der für die Wandleranordnung benötigt würde, und die Koppelfläche möglichst gering zu halten, ist der zweite Wandler 202 in einer vorteilhaften Ausführungsform entlang einer Längsrichtung des Querschnitts zwischen dem ersten und dritten Wandler 201, 203 angeordnet. Wie beispielhaft in den Figuren 2, 3 und 4 dargestellt, ist die Reihenfolge der Wandler im Querschnitt von links nach rechts somit: erster Wandler 201, zweiter Wandler 202, dritter Wandler 203. Anders ausgedrückt, liegt der zweite Wandler 202 direkt auf oder oberhalb oder unterhalb der kürzeren Grundseite des virtuellen Trapezes. Die Anordnung oberhalb der kürzeren Grundseite erlaubt dem zweiten Wandler 202 eine vergleichsweise lange Vorlaufstrecke, sodass bei einer späteren Anwendung eine Eintrittsechowiederholung zu größeren Zeiträumen verschoben wird, und kann daher vorteilhaft sein.

Bevorzugt ist der zweite Wandler 202 im Inneren des virtuellen Trapezes 260 angeordnet, um beispielsweise den Bauraum nicht unnötig zu vergrößern, und zwar so, um von der längeren Grundseite des virtuellen Trapezes 260 wegzuschallen. Besonders vorteilhaft ist eine Anordnung des zweiten Wandlers entlang der kürzeren Grundseite des Trapezes wie beispielsweise in Fig. 3 und Fig. 4 dargestellt.

In einer vorteilhaften Ausgestaltung umfassen der erste, zweite und der dritte Wandler 201, 202, 203 jeweils mindestens drei Wandlerelemente 210, um durch Überlagerung der entsandten Schallwellen der einzelnen Wandlerelemente 210 eines Wandlers eine ebene Welle bzw. eine Elementarwelle approximieren zu können. Um im Empfangsfall einen überschaubaren Datensatz zu produzieren, ist es aus heutiger Sicht zweckmäßig nicht mehr als 16 Wandlerelemente pro Wandler zu verwenden, wobei theoretisch auch deutlich mehr, z. B. 128, Wandlerelemente Verwendung finden können. Besonders bevorzugt weisen der erste, zweite und dritte Wandler 5 bis 10 Wandlerelemente 210 auf. Insbesondere haben sich 7 Wandlerelemente 210 als besonders vorteilhaft erwiesen, da die Qualität der erzeugten Schallwelle, der erzeugte Datensatz sowie der Aufwand für die Gerätetechnik sich hierbei die Waage halten.

Der erste und der dritte Wandler 201, 203 sind vorzugsweise baugleich, umfassen also zum Beispiel gleich viele Wandlerelemente, und sind im Querschnitt spiegelsymmetrisch angeordnet.

Insbesondere kann es sich beim ersten, zweiten und dritten Wandler 201, 202, 203 um einen erfindungsgemäßen Wandler 100 handeln, wie er weiter oben beschrieben ist.

Die Wandleranordnung 200 kann in einem Ultraschall-Prüfkopfsystem 300 verwendet werden. Das erfindungsgemäße Ultraschall-Prüfkopfsystem 300 kann einen Prüfkopf 280 oder mehrere, insbesondere 3, Prüfköpfe aufweisen. Die Verwendung von nur drei Prüfköpfen oder sogar nur einem Prüfkopf reduziert die Komplexität und die Anzahl von Prüfköpfen gegenüber konventionellen Systemen. Da auf eine Vielzahl von Prüfköpfen bei der Prüfung eines Materials verzichtet werden kann, ist das erfindungsgemäße Ultraschall-Prüfkopfsystem 300 auf einem deutlich geringeren Bauraum als konventionelle Prüfsysteme realisierbar.

Bei der konventionellen Ultraschallprüfung von Schienen mit Hilfe eines Schienenfahrzeuges werden beispielsweise 8 bis 10 Prüfköpfe pro Schiene auf einem Bauraum von mindestens einem Meter Länge untergebracht, wohingegen das erfindungsgemäße Ultraschall-Prüfkopfsystem 300 bzw. die erfindungsgemäße Wandleranordnung 200 in einem Schienenfahrzeug auch auf einem Bauraum von deutlich unter einem Meter Länge Platz findet. Das Ultraschall-Prüfkopfsystem 300 kann auf einem Bauraum von etwa 20 cm Länge und 3 cm Breite realisiert werden.

Wird die Wandleranordnung 200 auf drei Prüfköpfe aufgeteilt, wobei jeder Prüfkopf einen der drei Wandler umfasst, bietet dies den Vorteil, dass bei einem defekten Wandler nicht die ganze Wandleranordnung ausgetauscht werden muss, sondern einzelne Wandler der erfindungsgemäßen Wandleranordnung 200 substituiert werden können. Da der erste und der dritte Wandler 201, 203 baugleich realisiert werden können, können hier zudem Produktions-und Lagerkosten eingespart werden.

Die Unterbringung der Wandleranordnung 200 in einem einzelnen Prüfkopf ermöglicht hingegen einen kompakten und einfachen Aufbau des Ultraschall-Prüfkopfsystems 300 und erlaubt bei einem Defekt oder Ähnlichem den verhältnismäßig einfachen Austausch der Wandleranordnung 200 des Ultraschall-Prüfkopfsystems 300.

Das Ultraschall-Prüfkopfsystems 300 kann eine Vorlaufstrecke zum Beispiel in Form eines Prüfkopfkeils aufweisen. Die Wandleranordnung 200 kann auf dem Prüfkopfkeil 290 fixiert werden, der zum Beispiel aus einem oder mehreren Teilen bestehen kann. Vorzugsweise bildet der Prüfkopfkeil 290 die Form der Wandler 201, 202, 203 sowie der Wandleranordnung 200 derart ab, dass eine vollflächige Verklebung zwischen dem Prüfkopfkeil 290 und jeweils einer Seite der Wandler 201, 202, 203 ermöglicht wird, wie dies beispielhaft in den Figuren 5 bis 7 gezeigt ist. Die Wandler 201, 202, 203 sind dabei so angeordnet, dass sie in den Prüfkopfkeil 290 hineinschallen können. Das Material des Prüfkopfkeils 290 wird vorzugsweise so gewählt, dass die Geschwindigkeit der Longitudinalwellen, die von den Wandlern der Wandleranordnung ausgesandt werden, im Prüfkopfkeil 290 geringer ist als im zu prüfenden Material. Für die Prüfung von Schienen(stahl) kommt hier insbesondere Kunststoff in Frage, wobei vor allem Plexiglas und Polystyrol bevorzugt sind. Auch eine Aufhängung des ersten, zweiten und dritten Wandlers 201, 202, 203 der Wandleranordnung 200 in beispielsweise Wasser ist denkbar, um eine Vorlaufstrecke zu realisieren.

Durch die erfindungsgemäße Wandleranordnung 200 können verschiedene Einschallwinkel im zu prüfenden Material realisiert werden. Der Einschallwinkel ergibt sich aus der Ausbreitungsrichtung der Wellenfronten im zu prüfenden Material, die durch die Überlagerung der Schallwellen der einzelnen Wandlerelemente 210 eines Wandlers entstehen, wobei sich der Einschallwinkel jeweils gegenüber einem Lot einer Oberfläche des zu prüfenden Materials definiert, über die das Ultraschall-Prüfkopfsystem geführt wird. Ein senkrechtes Beschallen, wie insbesondere beim zweiten Wandler 202 möglich, entspricht dementsprechend einem Einschallwinkel von 0°, während der in Fig. 9 beispielhaft angegebene mittlere Einschallwinkel 440 am dritten Wandler 203 etwa 45° (bzw. -45°) entspricht.

Der erste, der zweite und der dritte Wandler 201, 202, 203 weisen durch die trapezartige Anordnung und die damit verbundenen verschiedenen Orientierungen gegenüber der Oberfläche eines zu prüfende Materials jeweils verschiedene Einschallwinkel auf. Wie weiter oben bereits erläutert, ist der Einschallwinkel in Normalenrichtung (vgl. Schallrichtung 213) in der Realität von einem Schallfeld umgeben, sodass jeder der Wandler einen Winkelbereich im Material beschallt, der mehrere Einschallwinkel abdeckt. Der Winkelbereich 445 kann dabei jeweils über eine verzögerte Ansteuerung der Wandlerelemente 210 eines Wandlers variiert werden. So können beispielsweise über Winkelkorrekturen herstellungsbedingte oder materialtechnische Abweichungen vom gewünschten Winkelbereich ausgeglichen werden oder der Winkelbereich durch Defokussierung des Schallfeldes verbreitert werden, sodass Echos aus einem größeren Materialbereich empfangen und Fehlstellen mit stärker abweichenden Orientierungen im Material detektiert werden können.

Die Defokussierung des Schallfeldes kann zudem wie weiter oben beschrieben mit Hilfe von gekrümmten Wandlern erreicht werden, wie beispielsweise den erfindungsgemäßen Wandlern 100. Durch eine Anordnung der Wandlerelemente 210 auf einer gekrümmten Bahn wie einem Kreisbogen divergiert das entsandte Schallfeld und verursacht eine Defokussierung des entsandten Schallfeldes, sodass mehrere Einschallwinkel gleichzeitig abgedeckt werden.

Im Gegensatz dazu haben konventionelle Prüfköpfe in der Regel nur einen festgelegten Einschallwinkel und eine vergleichsweise kleine Schallbündelöffnung, sodass verschiedene Prüfwinkel mit Hilfe einer Vielzahl von Prüfköpfen mit verschiedenen diskreten Einschallwinkeln realisiert werden, um so unterschiedlich orientierte Fehlstellen im Material nachzuweisen. Die Prüfwinkel beschreiben dabei die Richtung bezüglich der Oberflächennormalen (z. B. 0°, 35°, 55° und 70°), aus denen das Echo jeweils empfangen und anschließend ausgewertet wird. Die erfindungsgemäße Wandleranordnung 200 erlaubt hingegen eine große und freie Auswahl an Prüfwinkeln, unter denen das zu prüfende Material 420 auf Fehlstellen untersucht werden kann.

Für die Ultraschallprüfung von Schienen(stahl) liegen die Einschallwinkel bevorzugt zwischen -80° und +80°. Diese Einschallwinkel können mit erfindungsgemäßen Ultraschall-Prüfkopfsystem 400 gleichzeitig geprüft werden, wobei der erste und der dritte Wandler bevorzugt Transversalwellen im Material erzeugen, um Winkelbereiche von ±33° bis ±80° abzudecken, und wobei der zweite Wandler bevorzugt Longitudinalwellen nutzt, um eine "Senkrechtprüfung" zu realisieren, wobei hierbei ein Winkelbereich von etwa -33° bis +33° im Material beschallt wird. Die Winkel sind dabei jeweils gegenüber einem Lot der zu prüfenden Oberfläche des Materials definiert.

Die gleichzeitige Prüfung verschiedener Einschallwinkel stellt einen wesentlichen Vorteil gegenüber Prüfsystemen dar, die eine Phased-Array-Technik verwenden, da diese für jeden Einschallwinkel einen neuen Sende- und Empfangsvorgang benötigen.

Die Einschallwinkel, die im zu prüfenden Material realisiert werden, werden durch verschiedene Parameter beeinflusst. Zum einen spielen die Innenwinkel an der kürzeren Grundseite des virtuellen Trapezes und damit z.B. die Winkel zwischen dem ersten und zweiten Wandler sowie zwischen dem zweiten und dritten Wandler eine Rolle, da hiermit die Normalenrichtung der Schallwellen festgelegt wird. Zum anderen hängen die Einschallwinkelbereiche von der Defokussierung der Schallfelder der einzelnen Wandler ab, zum Beispiel durch Anordnung der Wandlerelemente auf einer gekrümmten Bahn oder verzögerte elektronische Ansteuerung, wobei eine stärkere Defokussierung des Schallfeldes eine Verbreiterung des Winkelbereichs bewirkt. Welche Innenwinkel an der kürzeren Grundseite des virtuellen Trapezes gewählt werden müssen hängt im Wesentlichen vom zu untersuchenden Material und dem Material des Prüfkopfkeils (bzw. der Vorlaufstrecke) ab, die die Geschwindigkeit der Schallwellen und die Brechungswinkel der Schallwellen an den auftretenden Grenzflächen bestimmen. Bei der Prüfung von Schienen können diese Grenzflächen beispielsweise zwischen dem Prüfkopfkeil (z.B. Plexiglas) und dem Koppelmedium (z.B. Wasser) sowie dem Koppelmedium und dem Schienenstahl auftreten. Für einen Prüfkopfkeil aus Plexiglas können die Vorlaufkeile, die den Winkel des ersten bzw. dritten Wandlers gegenüber der zu prüfenden Oberfläche festlegen, einen Winkel von 28° bis 54° aufweisen, so dass im Material kaum Longitudinalwellen entstehen und dort bevorzugt mit Transversalwellen gearbeitet werden kann. Für die Wandleranordnung ergibt sich damit ein vorteilhafter Innenwinkel an der kürzeren Grundseite des virtuellen Trapezes, der einen Betrag von 130° bis 147° aufweist. Für eine Vorlaufstrecke aus Wasser ist ein Innenwinkelbetrag von 156° bis 163° vorteilhaft.

In einer vorteilhaften Ausführungsform befindet sich ein Weggeber in der Nähe der Wandleranordnung 200. Bei dem Weggeber kann es sich beispielsweise um einen biinkrementalen Drehweggeber handeln. Der Weggeber kann die Relativbewegung der Wandleranordnung 200 gegenüber dem zu prüfenden Material erfassen und kann dazu genutzt werden Wegpositionen zu bestimmen. So kann mit Hilfe des Weggebers und beispielsweise eines Rekonstruktionsalgorithmus' die jeweilige Wegposition ermittelt werden, an der die Wandler der Wandleranordnung 200 einen Schallimpuls in ein zu prüfendes Material koppeln und auch die jeweilige Wegposition, an der die Wandler der Wandleranordnung 200 ein Echosignal empfangen. Um die Wegposition möglichst genau bestimmen zu können, sollte der Weggeber den zurückgelegten Weg mit einer Genauigkeit von mindestens λ/4 erfassen, wobei λ die Wellenlänge der von den Wandlerelementen ausgesandten Schallwellen im Material beschreibt.

Ein weiterer Aspekt der Erfindung betrifft ein Prüfverfahren zum Erfassen von Fehlstellen in einem Material 420, wobei das Prüfverfahren insbesondere für Schienen geeignet ist. Zunächst kann wie üblich ein Koppelmittel auf eine Oberfläche des Materials 420 aufgebracht werden, wobei bei großtechnischen Prüfungen aus kosten- und umweltschutzgründen vorzugsweise Wasser zu verwenden ist. Erfindungsgemäß wird bei dem Prüfverfahren ein Ultraschall-Prüfkopfsystem 400 entlang einer Bewegungsrichtung 430 entlang der Oberfläche des Materials 420 bewegt. Das erfindungsgemäße Ultraschall-Prüfkopfsystem 400 umfasst mindestens einen Wandler 401 mit einer Vielzahl an Wandlerelementen 410, die entlang der Bewegungsrichtung 430 zu einem Lineararray angeordnet sind. Während der Bewegung entlang der Oberfläche des Materials werden hochfrequente Sendeimpulse in das Material 420 eingekoppelt, die durch die Wandlerelemente 410 des Wandlers 401 erzeugt werden. Die eingekoppelten Sendeimpulse erzeugen Echosignale, die durch Reflexion an einer Fehlstelle im Material 420 bedingt sind und diese Echosignale können durch alle Wandlerelemente 410 des Wandlers 401 parallel empfangen werden. Die analogen Echosignale werden in digitale Daten umgewandelt, abgespeichert und zur Bestimmung der Lage der Fehlstelle im Material 420 ausgewertet.

Da die Wandlerelemente 420 entlang der Richtung angeordnet sind, in der sich der Wandler selbst auch bewegt, kann eine virtuelle Vergrößerung der Anzahl der Wandlerelemente 420 und somit eine Verlängerung des Wandlers 401 realisiert werden. Diese virtuelle Vergrößerung der Anzahl der Wandlerelemente entsteht insbesondere in der digitalen Datenverarbeitung, bei der einzelne aufeinanderfolgende Daten jeweils zusammen ausgewertet werden können.

Beispielsweise koppelt der Wandler 401 an einer Wegposition A einen Sendeimpuls ein und bewegt sich anschließend zu einer Wegposition B, an der ein neuer Sendeimpuls eingekoppelt wird, und anschließend noch zu einer weiteren Wegposition C. Zwischen den Wegpositionen A und B sowie den Wegpositionen B und C empfängt der Wandler 401 jeweils Echosignale. Diese Echosignale werden jeweils in digitale Daten umgewandelt und abgespeichert. Die digitalen Daten können anschließend miteinander verrechnet werden, wobei die Relativbewegung des Wandlers 401 gegenüber der Oberfläche des zu prüfenden Materials 420 berücksichtigt wird. Die Relativbewegung kann hierbei herausgerechnet werden und zurück bleiben die empfangenen Signale von verschiedenen Wegpositionen, die so behandelt werden können als seien sie von einem Wandler, der so viele Wandlerelemente aufweist, dass er sich von der Wegposition A über die Wegposition B bis zur Wegposition C erstreckt. Die Zuordnung von Wegpositionen kann durch einen Rekonstruktionsalgorithmus erfolgen und sich der Erfassung des aufgrund der Bewegung zurückgelegten Weges bedienen.

Der aufgrund der Bewegung zurückgelegte Weg kann zum Beispiel zu jedem Sendezeitpunkt erfasst werden, bevorzugt mit einer Auflösung von mindestens λ/4. Weiterhin kann eine Wegerfassung zwischen den Sendezeitpunkten (Zwischenabtastung) sinnvoll sein, um den zurückgelegten Weg bzw. Versatz zwischen zwei Sendeimpulsen nicht linear interpolieren zu müssen. Die Wegerfassung kann wie weiter oben beschrieben zum Beispiel mit einem Weggeber 310 erfolgen. Die Sendeimpulse können dabei in einem bestimmten zeitlichen Abstand zueinander erfolgen oder nach einer bestimmten Wegstrecke. Über die Verarbeitung der digitalen Daten können den Sendeimpulsen sowie den empfangenen Echosignalen jeweils Wegpositionen zugeordnet werden. Erfolgt beispielweise alle 5 mm ein Sendeimpuls, dann entstehen zwischen den Sendeimpulsen aufgrund des gleichzeitigen Empfangs der Wandlerelemente umfangreiche Datensätze, aus denen auch Wegpositionen zwischen den 5 mm-Intervallen berechnet werden können.

Die virtuelle Vergrößerung der Anzahl der Wandlerelemente führt theoretisch zu einem unendlich langen Wandler, der tatsächlich aber nur wenige Wandlerelementen umfassen muss.

Erfindungsgemäß kann das Prüfverfahren bereits mit drei Wandlerelementen 410 ausgeführt werden. Jedes Wandlerelement 410 kann beim Empfang der Echosignale beteiligt sein und somit nach der Digitalisierung der analogen Echosignale einen Datensatz produzieren, der abgespeichert wird. Um die Gesamtheit der Datensätze überschaubar zu halten, ist es vorteilhaft wenn der Wandler 401 nicht mehr als 16 Wandlerelemente 410 aufweist. Besonders bevorzugt weist der Wandler 401 fünf bis 10, ganz besonders bevorzugt 7 Wandlerelemente 410 auf.

Bevorzugt beschallt der Wandler 401 einen Winkelbereich 445 im Material, der mehrere Einschallwinkel abdeckt, die sich gegenüber einem Lot der Bewegungsrichtung 430, das durch den Mittelpunkt des Wandlers 401 verläuft definiert. Der Winkelbereich 445 umfasst bevorzugt die Einschallwinkel von -33° bis +33°, besonders bevorzugt von -20° bis +20°, wenn mit Longitudinalwellen gearbeitet wird, und Einschallwinkel von +33° bis +80°, besonders bevorzugt von +35° bis +70°, oder von -33° bis -80°, besonders bevorzugt von -35° bis -70°, wenn Transversalwellen erzeugt werden sollen.

Die Anregung der einzelnen Wandlerelemente geschieht durch elektrische Rechteckimpulse abhängig von der Nennfrequenz des Wandlers mit Pulsbreiten zwischen 20 und 2500 ns und mit Spannungen von bis zu 250 V. Der ortsabhängige akustische Sendeimpuls im Material entsteht durch die Überlagerung aller Teilwellen der einzelnen Wandlerelemente. Die relative Zeitverzögerung der Sendeimpulse trägt dabei zur Schallfeldformung bei. Die Einzelimpulse für die Wandlerelemente des Wandlers können dabei synchron übergeben werden oder aber wie oben beschrieben verzögert zu den weiter außen liegenden Wandlerelementen eines Wandlers, sodass das entstehende Schallfeld des Wandlers eine größere Divergenz hat und mit einem Sendeimpuls ein größerer Winkelbereich beschallt wird. Dadurch kann mit dem erfindungsgemäßen Prüfverfahren eine Prüfaufgabe mit vielen parallelen Prüffunktionen mit deutlich reduziertem Sensorikaufwand durchgeführt werden, im Vergleich zu Systemen, bei denen jede Prüffunktion durch einen eigenen Prüfkopf realisiert ist.

Durch eine verzögerte Ansteuerung kann zudem eine Änderung eines mittleren Einschallwinkels 440 des Winkelbereichs 445 herbeigeführt werden. Der mittlere Einschallwinkel 440 markiert dabei den Winkel, der sich als Mittelwert der Grenzen (z. B. bei -6 dB der Maximalamplitude) des Winkelbereichs 445 ergibt.

Die Änderung des mittleren Einschallwinkels 440 kann ähnlich wie mit Phased-Array-Systemen erfolgen. Im Gegensatz zu Prüfverfahren mit Phased-Array-Technik muss der mittlere Einschallwinkel des erfindungsgemäßen Prüfverfahrens allerdings nur einmalig eingestellt werden und das zugehörige Schallfeld kann für die gesamte Prüfung beibehalten werden. Da in der vorliegenden Erfindung bevorzugt mit einem defokussierten Schallfeld gearbeitet wird, können bereits viele Prüfwinkel mit nur einem mittleren Einschallwinkel 440 des Wandlers 401 berücksichtigt werden, ohne dass eine jeweilige neue Einstellung des Schallfeldes auf einen bestimmten Prüfwinkel vorgenommen werden muss. Das erfindungsgemäße Prüfverfahren erlaubt damit eine deutlich einfachere und günstigere Gerätetechnik als Prüfverfahren, die mit einer Phased-Array-Technik arbeiten.

Diskrete Prüfwinkel (z. B. 0°, 35°, 55° und 70) können im erfindungsgemäßen Prüfverfahren insbesondere im Empfangsfall ausgewählt werden, indem beispielsweise bei der digitalen Datenverarbeitung nur die Echosignale einzelner Prüfwinkel ausgewertet werden.

Während des erfindungsgemäßen Prüfverfahrens, beschallt der Wandler 401 immer einen Winkelbereich im Material, sodass unter Umständen ein bestimmter Aufpunkt im Material, der bei einem ersten Sendeimpuls ein Signal erzeugt, auch bei einem nachfolgenden Sendeimpuls noch antworten kann. Ein Aufpunkt kann somit mehrere Beiträge bedingen, die bei der Auswertung der digitalen Daten phasenrichtig und mit korrigierter Laufzeit aufaddiert werden können. Über die Berücksichtigung destruktiver und konstruktiver Interferenz können damit Lagen von Fehlstellen im Material bestimmt werden.

Im erfindungsgemäßen Prüfverfahren kann auf eine Vielzahl von elektronischen Baugruppen verzichtet werden, die zum Beispiel eine Verzögerungssteuerung, eine Summation der Empfangssignale oder Datenverdichtungen ermöglichen, da diese Funktionen durch Software realisiert werden können, die die digitalen Daten verarbeitet. Sowohl die Empfangs- als auch die Sendekette weisen daher einen vergleichsweise einfachen Aufbau auf.

In einer vorteilhaften Ausführungsform entspricht der Wandler 401 dem Wandler 100, sodass die Wandlerelemente 410 auf einem Kreisbogen eines virtuellen Kreises angeordnet sind, um einen Sektor einer Elementarwelle zu approximieren, sodass beispielsweise vereinfachte Algorithmen, die sich auf Punktquellen beschränken, Anwendung finden können.

In einer anderen vorteilhaften Ausführungsform entspricht das Ultraschall-Prüfkopfsystem 400 im erfindungsgemäßen Prüfverfahren einem Ultraschall-Prüfkopfsystem 300 mit einer trapezartigen Wandleranordnung 200, wie sie weiter oben beschrieben ist. In dieser Ausführungsform kommen demnach drei Wandler 201, 202, 203 zum Einsatz, deren Wandlerelemente jeweils entlang der Bewegungsrichtung angeordnet sind, wobei die Bewegungsrichtung parallel zu den Grundseiten des virtuellen Trapezes ist. Bevorzugt ist der zweite Wandler entlang der kürzeren Grundseite des virtuellen Trapezes angeordnet, wobei durch die Anordnung oberhalb der kürzeren Grundseite auch eine längere Vorlaufstrecke des zweiten Wandler erreicht werden kann. Die drei Wandler 201, 202, 203 werden insbesondere derart angesteuert, dass sie zeitgleich einen Sendeimpuls aussenden, wobei ein Materialbereich, d.h. ein Volumenbereich im Material 420, durch je ein Schallfeld beschallt wird, d.h. sich die Schallfelder räumlich nicht überlagern. Die Impulsfolgefrequenz kann beispielsweise 4 kHz betragen oder die Impulse können ortssynchron, also zum Beispiel alle 3 mm, entsendet werden. An der Rückwand und/oder Fehlstellen im Materialbereich wird der Schall der drei Wandler 201, 202, 203 reflektiert (Echo) und kann von den drei Wandlern 201, 202, 203 parallel im Mehrkanalbetrieb aufgenommen werden. Die Empfangssignale werden digitalisiert und weiterverarbeitet, wobei der Rekonstruktionsalgorithmus die Prüfgeschwindigkeit der Bewegung berücksichtigt und eine ortsgetreue Zuordnung der Empfangssignale zulässt.

In dieser Ausführungsform wird in dem erfindungsgemäßen Prüfverfahren nach dem Prinzip der Ultraschall-Mehrkanaltechnik gearbeitet, bei der mehrere Wandler den zur Prüfung verwendeten Schall einschallen. Bevorzugt ist das Mehrkanal-Ultraschallgerät 450 mit einem Vorverstärker, der die Empfangssignale der Wandlerelemente verstärkt, und einer Schnittstelle ausgestattet, die zwischen dem Mehrkanal-Ultraschallgerät und einem Computer 470 vermittelt, und weist jeweils einen Analog-Digital-Umsetzer pro Kanal auf, der zur Digitalisierung der analogen Echosignale und der messtechnischen Aufbereitung der Prüfdaten dient. Über eine schnelle Netzwerkverbindung kann das Mehrkanal-Ultraschallgerät empfangene Signale an einen Computer mit digitaler Signalverarbeitung übergeben, in dem die Signale ausgewertet werden. Der Computer kann zudem über einen Taktgenerator 460 Signale zu einer Wegerfassung von einem in der Nähe der Wandler angeordneten Weggeber 310 erhalten. Neben einem Mehrkanalgerät können auch mehrere parallel ansteuerbare Einkanalgeräte an die Wandler angeschlossen werden. Hierzu sollten die Einkanalgeräte so synchronisiert sein, dass die Wandlerelemente gleichzeitig ausgelöst werden können.

Indem die Wandler 201, 202, 203 derart orientiert sind, dass sie vom Inneren des virtuellen Trapezes wegschallen, kann erreicht werden, dass sich die von jedem Wandler ausgesandten Schallwellen möglichst wenig mit denen der anderen zwei Wandler überlagern. Während der zweite Wandler direktzur Oberfläche des Materials schallt, schallt der erste Wandler überwiegend entgegen der Bewegungsrichtung und der dritte Wandler überwiegend in Bewegungsrichtung 430 (bzw. umgekehrt). Der Winkelbereich 445, der vom ersten bzw. dritten Wandler abgedeckt wird, umfasst dabei bevorzugt die Einschallwinkel von +33° bis +80°, besonders bevorzugt von +35° bis +70°, bzw. von -33° bis -80°, besonders bevorzugt von -35° bis -70°. Durch die Wahl des Einfallswinkels auf die Koppelfläche im Prüfkopfkeil können durch den ersten und den dritten Wandler insbesondere Transversalwellen erzeugt werden. Die vom zweiten Wandler ausgesandten Schallwellen weisen insbesondere einen mittleren Einschallwinkel von 0° auf. Dieser wird von einem Winkelbereich umgeben, der bevorzugt die Einschallwinkel von -33° bis +33°, besonders bevorzugt von -20° bis +20°, umfasst. Der zweite Wandler erzeugt bevorzugt Longitudinalwellen.

Wie weiter oben bereits beschrieben, hängt es vom beabsichtigten Winkelbereich, dem Material des Prüfkopfkeils (typischerweise Plexiglas) sowie dem zu untersuchenden Material (z.B. Stahl für Schienenprüffahrzeuge) ab, wie die Winkel des ersten und dritten Wandlers 201, 203 gegenüber der zu untersuchenden Oberfläche ausfallen müssen. Die Innenwinkel an der kürzeren Grundseite des virtuellen Trapezes müssen dementsprechend gewählt werden.

Durch die gleichzeitige Beschallung des gesamten relevanten Materialbereichs unter allen gewünschten Einschallwinkeln mit Hilfe eines defokussierten Schallfeldes und der parallelen Datenaufnahme jedes Wandlerelements, deren Daten anschließend mit einem Rekonstruktionsalgorithmus unter Berücksichtigung der Prüfgeschwindigkeit aufbereitet und zu einem Ergebnisbild zusammengefügt werden können, erlaubt die erfindungsgemäße Ausführungsform des Prüfverfahrens maximale Prüfgeschwindigkeiten von bis zu 100 km/h, ohne die Auflösung einzuschränken. Im Vergleich dazu werden bei Prüfverfahren mit Phased-Array-Systemen, bei denen für jeden Prüfwinkel eine neue Fokussierung und ein neuer Sendevorgang notwendig sind, nur geringe Prüfgeschwindigkeiten von maximal 10 km/h erreicht.

Durch die erfindungsgemäße Wandleranordnung 200 können in dem erfindungsgemäßen Prüfverfahren zeitgleich alle Einschallwinkel 440 realisiert werden, die für die Prüfung eines Materials, insbesondere Schienen, relevant sind. Die Auswahl der Prüfwinkel erfolgt bei der vorliegenden Erfindung vorzugsweise beim Empfang der Schallwellen, die an der Rückwand und/oder Fehlstellen im Material reflektiert wurden. Dadurch wird mit der vorliegenden Erfindung eine hohe Flexibilität gegenüber konventionellen Prüfverfahren erreicht, da über die Anpassung der Prüfwinkel verschiedene Formen des zu untersuchenden Materials (z.B. die Schienengeometrie) sowie unterschiedliche Fehlertypen berücksichtigt werden können. Neben der Lage des Fehlers sind insbesondere auch in Abhängigkeit seines Reflexionsverhaltens die Fehlerart sowie dessen Ausdehnung erfassbar.

Zur Realisierung der relativ breiten Winkelbereiche 445 ist die Verwendung von gegenüber der Oberfläche des Materials 420 konvex gekrümmten Wandlern vorteilhaft, sodass das Schallfeld in Richtung zur Oberfläche hin divergiert, wie dies beispielsweise durch die erfindungsgemäßen Wandler 100 gegeben ist. Eine zusätzliche oder alternative Schallfeldverbreiterung kann durch ein verzögertes Ansteuern der einzelnen Wandlerelemente eines Wandlers erreicht werden, sodass die einzelnen Schallwellen geringfügig verzögert gesendet werden.

Für eine ortsgetreue Zuordnung der Echosignale ist es vorteilhaft ist es, wenn die Wandler 201, 202, 203 der Wandleranordnung 200 im Ultraschall-Prüfkopfsystem fest fixiert sind, sodass die Innenwinkel des virtuellen Trapezes sowie der Abstand untereinander und zur Prüffläche bekannt sind. Die Abstände sind vorzugsweise in einer Genauigkeit deren Größe einer Viertel Wellenlänge (λ/4) des zur Prüfung verwendeten Ultraschallpulses - gemessen im Material - entspricht. Vorzugsweise beträgt die verwendete Wellenlänge zirka 1,6 mm, sodass eine Genauigkeit von etwa 0,4 mm erzielt werden sollte. Die bekannten Werte können als Parameter in den Rekonstruktionsalgorithmus übergeben werden und so in die Auswertung der digitalen Daten einfließen.

Der Rekonstruktionsalgorithmus berücksichtigt vorzugsweise die Wegposition und die Geschwindigkeit zum Zeitpunkt des Empfangs des Schallfeld-Echos, die Positionierung der Wandler und konvexe Krümmung der Wandler gegenüber dem Material, wenn letztere vorliegt. Durch die Berücksichtigung der Prüfgeschwindigkeit, wird die maximal erreichbare Auflösung bei der Ergebnisdarstellung verbessert, indem der geschwindigkeitsabhängige Versatz (z.B. etwa 4 mm bei 60 km/h an einer UIC60 Schiene) des Ultraschall-Prüfkopfsystem auf der Materialoberfläche während der Laufzeit des Schalls durch das Material korrigiert werden kann. Die Geschwindigkeitsunabhängigkeit des Prüfergebnisses ist insbesondere für die Prüfung von Schienen mit Schienenfahrzeugen von Bedeutung, da diese erst ab einer Geschwindigkeit von mehr als 70 km/h den regelmäßigen Schienenverkehr nicht durch die Prüfung behindern.

Durch den Rekonstruktionsalgorithmus kann zudem eine bildgebende Ergebnisdarstellung des Prüfergebnisses realisiert werden, bei dem die Amplitude und die Phase des Empfangssignals berücksichtigt werden. Die Position und Form der detektierten Fehleranzeige können unter Anwendung für die Ultraschallprüfung üblicher bildgebender Darstellungsalgorithmen in ein Bild überführt werden, zum Beispiel durch B-Bildüberlagerung in ein P-Bild in side view (vgl. DIN EN ISO 5577), mit überlagerten Prüffunktionen. Für eine Darstellung der Prüfergebnisse ist der Computer vorzugsweise an einen oder mehrere Bildschirme angeschlossen.

Es wird darauf hingewiesen, dass die hierin dargestellten Merkmale mit einer Ausführungsform exemplarisch für die spezifische Ausführungsform sind und auf oder in Kombination mit anderen hierin offenbarten Ausführungsformen verwendet werden können.

### Bezugszeichenliste

- 100: Wandler
- 110: Wandlerelemente
- 120: virtueller Kreis
- 130: Sektor einer Elementarwelle
- 131: Wellenfront
- 140: virtuelle Punktquelle
- 150: Mittelpunktswinkel
- 200: Wandleranordnung
- 201: erster Wandler
- 202: zweiter Wandler
- 203: dritter Wandler
- 210: Wandlerelemente
- 212: Richtung
- 213: Schallrichtung
- 260: virtuelles Trapez
- 270: Innenwinkel an kürzerer Grundseite
- 280: Prüfkopf
- 290: Prüfkopfkeil
- 300: Ultraschall-Prüfkopfsystem
- 310: Weggeber
- 400: Ultraschall-Prüfkopfsystem
- 401: Wandler
- 410: Wandlerelemente
- 420: zu prüfendes Material
- 430: Bewegungsrichtung
- 440: Mittlerer Einschallwinkel
- 445: Winkelbereich
- 450: Ultraschallgerät
- 460: Taktgenerator
- 470: Computer

## Patentansprüche

1. Ultraschall-Prüfkopfsystem (300) mit einer Wandleranordnung,
wobei die Wandleranordnung einen ersten, einen zweiten und einen dritten Wandler (201, 202, 203) zum Senden und Empfangen von Schallwellen umfasst,
wobei jeder der Wandler mindestens drei Wandlerelemente (210) umfasst, und
wobei die Wandlerelemente der Wandler jeweils auf einem Kreisbogen eines virtuellen Kreises (120) angeordnet sind, sodass sich von den Wandlerelementen (110) ausgesandte Schallwellen jedes Wandlers derart überlagern, dass sie einen Sektor einer Elementarwelle (130) mit einer virtuellen Punktquelle (140) approximieren, wobei sich die virtuelle Punktquelle (140) im Mittelpunkt des virtuellen Kreises (120) befindet,
wobei in einem Querschnitt die Wandlerelemente (210) des zweiten Wandlers (202) entlang einer Geraden angeordnet sind, die parallel zu den Grundseiten eines virtuellen Trapezes (260) ist, wobei die Gerade einer Tangente an der Mitte des Kreisbogens, auf dem die Wandlerelemente (210) des zweiten Wandlers (202) angeordnet sind, entspricht,
wobei entlang der nicht-parallelen Schenkel des virtuellen Trapezes (260) die Wandlerelemente des ersten und des dritten Wandler (201, 203) angeordnet sind, wobei die Schenkel des virtuellen Trapezes (260) jeweils einer Tangente an der Mitte des Kreisbogens, auf dem die Wandlerelemente (210) des ersten und dritten Wandlers (201, 203) angeordnet sind, entsprechen,
wobei die Wandleranordnung (200) in einem einzelnen Prüfkopf (280) untergebracht ist oder wobei die Wandleranordnung (200) auf drei Prüfköpfe aufgeteilt ist, die jeweils einen der Wandler aufnehmen,
wobei das Ultraschall-Prüfkopfsystem eine Vorlaufstrecke in Form eines Prüfkopfkeils (290) aufweist.

2. Ultraschall-Prüfkopfsystem nach Anspruch 1, wobei der Prüfkopfkeil (290) die Form der Wandler (201, 202, 203) sowie der Wandleranordnung (200) derart abbildet, dass eine vollflächige Verklebung zwischen dem Prüfkopfkeil (290) und einer Seite der Wandler (201, 202, 203) ermöglicht wird, wobei die Wandler (201, 202, 203) so angeordnet sind, um in den Prüfkopfkeil (290) hinein zu schallen.

3. Ultraschall-Prüfkopfsystem nach Anspruch 1 oder 2, wobei der Prüfkopfkeil (290) aus Kunststoff, insbesondere Plexiglas oder Polystyrol, besteht.

4. Ultraschall-Prüfkopfsystem nach einem der Ansprüche 1 bis 3, wobei die Wandler (201, 202, 203) jeweils derart ausgerichtet sind, dass sie ganz oder zumindest teilweise in eine Richtung (212) schallen können, die von der längeren Grundseite des virtuellen Trapezes zur kürzeren Grundseite des virtuellen Trapezes verläuft.

5. Ultraschall-Prüfkopfsystem nach einem der Ansprüche 1 bis 4, wobei jeder der Wandler 3 bis 16, besonders bevorzugt 5 bis 10, ganz besonders bevorzugt 7 Wandlerelemente (210) umfasst.

6. Ultraschall-Prüfkopfsystem nach einem der Ansprüche 1 bis 5, zusätzlich umfassend einen Weggeber (310), wobei der Weggeber (310) bevorzugt in der Nähe der Wandleranordung (200) angebracht und mit dieser verbunden ist.

7. Prüfverfahren zum Erfassen von Fehlstellen in einem Material (420), insbesondere in Schienen, aufweisend:
Bewegen eines Ultraschall-Prüfkopfsystems (400) entlang einer Oberfläche des Materials (420) entlang einer Bewegungsrichtung (430), wobei
das Ultraschall-Prüfkopfsystem (400) einen Wandler (401) umfasst, der entlang der Bewegungsrichtung (430) eine Anordnung aus mindestens drei Wandlerelementen (410) aufweist, wobei
hochfrequente Sendeimpulse ins Material (420) eingekoppelt werden, die durch die Wandlerelemente (410) des Wandlers (401) erzeugt werden, wobei
Echosignale durch alle Wandlerelemente (410) des Wandlers (401) parallel empfangen werden, wobei die Echosignale jeweils durch Reflexion der eingekoppelten Sendeimpulse an einer Fehlstelle im Material (420) bedingt sind, und wobei die analogen Echosignale in digitale Daten umgewandelt werden, die dann abgespeichert und zur Bestimmung der Lage der Fehlstelle im Material (420) ausgewertet werden, wobei
die Anzahl der Wandlerelemente des Wandlers entlang der Bewegungsrichtung (430) eine virtuelle Vergrößerung aufgrund der Bewegung und der Auswertung der digitalen Daten erfährt, wobei
die virtuelle Vergrößerung über die Zuordnung von Wegpositionen für die eingekoppelten Sendeimpulse und/oder die empfangenen Echosignale realisiert wird,
wobei das Ultraschall-Prüfkopfsystem ein Ultraschall-Prüfkopfsystem gemäß einem der Ansprüche 1 bis 6 ist und wobei der erste, zweite und dritte Wandler (201, 202, 203) jeweils dem Wandler (401) entsprechen.

8. Prüfverfahren nach Anspruch 7, wobei jeweils der Weg zwischen zwei Sendeimpulsen, den der Wandler (401) aufgrund der Bewegung zurücklegt, erfasst wird und den Sendeimpulsen sowie den empfangenen Echosignalen jeweils eine Wegposition zugeordnet wird, insbesondere, wobei der Weg zwischen zwei Sendeimpulsen, mit einer Genauigkeit von mindestens λ/4 erfasst wird, wobei λ die Wellenlänge der von den Wandlerelementen (410) ausgesandten Schallwellen im Material (420) beschreibt.

9. Prüfverfahren nach einem der Ansprüche 7 bis 8, wobei der Wandler (401) einen Winkelbereich (445) im Material beschallt, wobei der Winkelbereich (445) mehrere Einschallwinkel abdeckt, die sich gegenüber einem Lot der Bewegungsrichtung (430), das durch den Mittelpunkt des Wandlers (401) verläuft, definieren, und wobei der Winkelbereich (445) Einschallwinkel von -33° bis +33°, besonders bevorzugt von -20° bis +20°, umfasst, wenn der Wandler (401) Longitudinalwellen erzeugt, und der Winkelbereich (445) Einschallwinkel von +33° bis +80°, besonders bevorzugt von +35° bis +70°, oder von -33° bis -80°, besonders bevorzugt von -35° bis -70°, umfasst, wenn der Wandler (401) Transversalwellen erzeugt, insbesondere, wobei die Wandlerelemente (410) des Wandlers (401) geringfügig verzögert angesteuert werden, sodass durch die Überlagerung der Schallwellen des Wandlers (401) der beschallte Winkelbereich (445) im Material beeinflusst wird.

10. Prüfverfahren nach Anspruch 9, wobei der beschallte Winkelbereich (445) während des Prüfverfahrens konstant bleibt und/oder wobei die verzögerte Ansteuerung zu einer Verbreiterung des beschallten Winkelbereichs (445) führt und/oder wobei die verzögerte Ansteuerung zu einer Änderung eines mittleren Einschallwinkels (440) des Winkelbereichs (445) führt.

11. Prüfverfahren nach Anspruch 7, wobei jeder der Wandler (201, 202, 203) mit einem Mehrkanal-Ultraschallgerät (450) oder mehreren Einkanal-Ultraschallgeräten (450) verbunden ist, wobei die Ultraschallgeräte (450) Signale über ein schnelles Netzwerk an einen Computer (470) mit digitaler Signalverarbeitung übergeben, und insbesondere wobei der Computer (470) über einen Taktgenerator (460) Signale zu einer Wegerfassung von einem in der Nähe der Wandleranordnung (200) angebrachten Weggeber (310) erhält.

12. Prüfverfahren nach einem der Ansprüche 7 bis 11, wobei das Auswerten über Signalmittelung mit korrigierter Laufzeit und phasenrichtiger Addition von Aufpunkten und/oder unter Berücksichtigung einer Wegerfassung erfolgt.

## Claims

1. Ultrasonic inspection head system (300) having a transducer arrangement,
wherein the transducer arrangement comprises a first, a second and a third transducer (201, 202, 203) for transmitting and receiving sound waves,
wherein each of the transducers comprises at least three transducer elements (210), and
wherein the transducer elements of the transducers are each arranged on a circular arc of a virtual circle (120) so that sound waves emitted by the transducer elements (110) of each transducer are overlaid in such a way that they approximate a sector of an elementary wave (130) with a virtual point source (140), wherein the virtual point source (140) is located at the center of the virtual circle (120),
wherein, in a cross section, the transducer elements (210) of the second transducer (202) are arranged along a straight line which is parallel to the base sides of a virtual trapezoid (260), wherein the straight line corresponds to a tangent at the center of the circular arc on which the transducer elements (210) of the second transducer (202) are arranged,
wherein the transducer elements of the first and the third transducers (201, 203) are arranged along the non-parallel legs of the virtual trapezoid (260), wherein the legs of the virtual trapezoid (260) each correspond to a tangent at the center of the circular arc on which the transducer elements (210) of the first and the third transducers (201, 203) are arranged,
wherein the transducer arrangement (200) is housed in a single inspection head (280) or wherein the transducer arrangement (200) is divided into three inspection heads which each accommodate one of the transducers,
wherein the ultrasonic inspection head system has a delay line in the form of an inspection head wedge (290).

2. Ultrasonic inspection head system according to claim 1, wherein the inspection head wedge (290) replicates the shape of the transducers (201, 202, 203) and the transducer arrangement (200) in such a way that full-surface bonding between the inspection head wedge (290) and one side of the transducers (201, 202, 203) is made possible, wherein the transducers (201, 202, 203) are arranged so as to transmit sound into the inspection head wedge (290).

3. Ultrasonic inspection head system according to either claim 1 or claim 2, wherein the inspection head wedge (290) consists of plastics material, in particular Plexiglas or polystyrene.

4. Ultrasonic inspection head system according to any of claims 1 to 3, wherein the transducers (201, 202, 203) are each aligned in such a way that they can transmit sound entirely or at least partly in a direction (212) which extends from the longer base side of the virtual trapezoid to the shorter base side of the virtual trapezoid.

5. Ultrasonic inspection head system according to any of claims 1 to 4, wherein each of the transducers comprises 3 to 16, particularly preferably 5 to 10, even more particularly preferably 7, transducer elements (210).

6. Ultrasonic inspection head system according to any of claims 1 to 5, additionally comprising a position sensor (310), wherein the position sensor (310) is preferably mounted close to the transducer arrangement (200) and connected thereto.

7. Inspection method for detecting defects in a material (420), in particular in rails, comprising:
moving an ultrasonic inspection head system (400) along a surface of the material (420) in a direction of movement (430), wherein
the ultrasonic inspection head system (400) comprises a transducer (401) which has an arrangement of at least three transducer elements (410) in the direction of movement (430), wherein
high-frequency transmission pulses which are generated by the transducer elements (410) of the transducer (401) are coupled into the material (420), wherein
echo signals are received in parallel by all the transducer elements (410) of the transducer (401), wherein the echo signals are each caused by the coupled-in transmission pulses being reflected at a defect in the material (420), and wherein
the analog echo signals are converted into digital data which are then stored and evaluated to determine the position of the defect in the material (420), wherein
the number of transducer elements of the transducer in the direction of movement (430) undergoes a virtual increase due to the movement and the evaluation of the digital data, wherein
the virtual increase is carried out by assigning path positions for the coupled-in transmission pulses and/or the received echo signals,
wherein the ultrasonic inspection head system is an ultrasonic inspection head system according to any of claims 1 to 6, and wherein the first, second and third transducers (201, 202, 203) each correspond to the transducer (401).

8. Inspection method according to claim 7, wherein the path between two transmission pulses traversed by the transducer (401) due to the movement is detected and a path position is assigned to the transmission pulses and the received echo signals, wherein, in particular, the path between two transmission pulses is detected with an accuracy of at least λ/4, where λ describes the wavelength of the sound waves emitted by the transducer elements (410) in the material (420).

9. Inspection method according to either of claims 7 and 8, wherein the transducer (401) exposes an angular range (445) in the material to sound, wherein the angular range (445) covers a plurality of acoustic irradiation angles which are defined relative to a perpendicular of the direction of movement (430) that extends through the center of the transducer (401), and wherein the angular range (445) comprises acoustic irradiation angles from -33° to +33°, particularly preferably from - 20° to +20°, when the transducer (401) generates longitudinal waves, and the angular range (445) comprises acoustic irradiation angles from +33° to +80°, particularly preferably from +35° to +70°, or from -33° to -80°, particularly preferably from -35° to - 70°, when the transducer (401) generates transverse waves, wherein, in particular, the transducer elements (410) of the transducer (401) are actuated with a slight delay so that overlaying the sound waves of the transducer (401) influences the angular range (445) exposed to sound in the material.

10. Inspection method according to claim 9, wherein the angular range (445) exposed to sound remains constant during the inspection method and/or wherein the delayed actuation leads to a widening of the angular range (445) exposed to sound and/or wherein the delayed actuation leads to a change in an average acoustic irradiation angle (440) of the angular range (445).

11. Inspection method according to claim 7, wherein each of the transducers (201, 202, 203) is connected to a multi-channel ultrasound device (450) or a plurality of single-channel ultrasound devices (450), wherein the ultrasound devices (450) transmit signals via a fast network to a computer (470) having digital signal processing, and wherein, in particular, the computer (470) obtains signals for position detection from a position sensor (310) mounted close to the transducer arrangement (200) via a clock generator (460).

12. Inspection method according to any of claims 7 to 11, wherein the evaluation is carried out via signal averaging with corrected runtime and phase-correct addition of reference points and/or taking into account path detection.

## Revendications

1. Système de sonde à ultrasons (300) avec un ensemble de convertisseur, dans lequel l'ensemble de convertisseur comprend un premier, un deuxième et un troisième convertisseur (201, 202, 203) pour envoyer et recevoir des ondes sonores,
dans lequel chacun des convertisseurs comprend au moins trois éléments de convertisseur (210), et
dans lequel les éléments de convertisseur des convertisseurs sont disposés respectivement sur un arc de cercle d'un cercle virtuel (120), de sorte que les ondes sonores émises par les éléments de convertisseur (110) de chaque convertisseur se superposent, de telle sorte qu'elles s'approchent par approximation d'un secteur d'une onde élémentaire (130) avec une source ponctuelle virtuelle (140), dans lequel la source ponctuelle virtuelle (140) se trouve au centre du cercle virtuel (120),
dans lequel dans une section transversale les éléments de convertisseur (210) du deuxième convertisseur (202) sont disposés le long d'une droite qui est parallèle aux côtés de base d'un trapèze virtuel (260), dans lequel la droite correspond à une tangente au milieu de l'arc de cercle sur lequel les éléments de convertisseur (210) du deuxième convertisseur (202) sont disposés,
dans lequel les éléments de convertisseur du premier et du troisième convertisseur (201, 203) sont disposés le long des branches non parallèles du trapèze virtuel (260), dans lequel les branches du trapèze virtuel (260) correspondent respectivement à une tangente au milieu de l'arc de cercle sur lequel les éléments de convertisseur (210) du premier et troisième convertisseur (201, 203) sont disposés,
dans lequel l'ensemble de convertisseur (200) est placé dans une sonde (280) individuelle ou dans lequel l'ensemble de convertisseur (200) est divisé en trois sondes qui logent respectivement un des convertisseurs,
dans lequel le système de sonde à ultrasons présente un parcours aller sous forme d'une clavette de sonde (290).

2. Système de sonde à ultrasons selon la revendication 1, dans lequel la clavette de sonde (290) reproduit la forme des convertisseurs (201, 202, 203) ainsi que de l'ensemble de convertisseur (200), de telle sorte qu'une adhérence sur toute la surface est permise entre la clavette de sonde (290) et un côté des convertisseurs (201, 202, 203), dans lequel les convertisseurs (201, 202, 203) sont disposés afin de réaliser une action d'ultrasons à l'intérieur de la clavette de sonde (290).

3. Système de sonde à ultrasons selon la revendication 1 ou 2, dans lequel la clavette de sonde (290) est constituée de matière plastique, en particulier de plexiglas ou de polystyrène.

4. Système de sonde à ultrasons selon l'une quelconque des revendications 1 à 3, dans lequel les convertisseurs (201, 202, 203) sont orientés respectivement de telle sorte qu'ils peuvent réaliser une action d'ultrasons entièrement ou au moins en partie dans une direction (212) qui va du côté de base plus long du trapèze virtuel au côté de base plus court du trapèze virtuel.

5. Système de sonde à ultrasons selon l'une quelconque des revendications 1 à 4, dans lequel chacun des convertisseurs comprend 3 à 16, de manière particulièrement préférée 5 à 10, mieux encore 7 éléments de convertisseur (210).

6. Système de sonde à ultrasons selon l'une quelconque des revendications 1 à 5, comprenant en plus un capteur de trajet (310), dans lequel le capteur de trajet (310) est monté de préférence près de l'ensemble de convertisseur (200) et relié à celui-ci.

7. Procédé de vérification pour détecter des défauts dans un matériau (420), en particulier dans des rails, présentant :
le déplacement d'un système de sonde à ultrasons (400) le long d'une surface du matériau (420) le long d'une direction de mouvement (430), dans lequel
le système de sonde à ultrasons (400) comprend un convertisseur (401) qui présente le long de la direction de mouvement (430) un ensemble composé d'au moins trois éléments de convertisseur (410), dans lequel
des impulsions émises à haute fréquence sont injectées dans le matériau (420) qui sont produites par les éléments de convertisseur (410) du convertisseur (401), dans lequel
des signaux d'écho sont reçus en parallèle par tous les éléments de convertisseur (410) du convertisseur (401), dans lequel les signaux d'écho sont provoqués respectivement par réflexion des impulsions émises injectées sur un défaut dans le matériau (420), et dans lequel
les signaux d'écho analogiques sont convertis en données numériques qui sont alors mises en mémoire et évaluées pour la détermination de la situation du défaut dans le matériau (420), dans lequel
le nombre des éléments de convertisseur du convertisseur le long de la direction de mouvement (430) subit une augmentation virtuelle en raison du mouvement et de l'évaluation des données numériques, dans lequel
l'augmentation virtuelle est réalisée par l'intermédiaire de l'affectation de positions de trajet pour les impulsions émises injectées et/ou les signaux d'écho reçus,
dans lequel le système de sonde à ultrasons est un système de sonde à ultrasons selon l'une quelconque des revendications 1 à 6 et dans lequel les premier, deuxième et troisième convertisseurs (201, 202, 203) correspondent respectivement au convertisseur (401).

8. Procédé de vérification selon la revendication 7, dans lequel respectivement le trajet entre deux impulsions émises, que le convertisseur (401) parcourt en raison du mouvement, est détecté et respectivement une position de trajet est affectée aux impulsions émises ainsi qu'aux signaux d'écho reçus, en particulier, dans lequel le trajet entre deux impulsions émises est détecté avec une précision d'au moins λ/4, dans lequel λ décrit la longueur d'onde des ondes sonores émises par les éléments de convertisseur (410) dans le matériau (420).

9. Procédé de vérification selon l'une quelconque des revendications 7 et 8, dans lequel le convertisseur (401) expose une zone angulaire (445) dans le matériau à l'action des ultrasons, dans lequel la zone angulaire (445) couvre plusieurs angles d'irradiation aux ultrasons qui se définissent par rapport à une perpendiculaire de la direction de mouvement (430) qui passe à travers le centre du convertisseur (401), et dans lequel la zone angulaire (445) comprend des angles d'irradiation aux ultrasons de -33° à +33°, de manière particulièrement préférée de -20° à +20°, lorsque le convertisseur (401) produit des ondes longitudinales, et la zone angulaire (445) comprend des angles d'irradiation aux ultrasons de +33° à +80°, de manière particulièrement préférée de +35° à +70°, ou de -33° à -80°, de manière particulièrement préférée de -35° à -70°, lorsque le convertisseur (401) produit des ondes transversales, en particulier, dans lequel les éléments de convertisseur (410) du convertisseur (401) sont commandés de manière légèrement différée, de sorte que la zone angulaire (445) exposée à l'action des ultrasons dans le matériau est influencée par la superposition des ondes sonores du convertisseur (401).

10. Procédé de vérification selon la revendication 9, dans lequel la zone angulaire (445) exposée à l'action des ultrasons reste constante pendant le procédé de vérification et/ou dans lequel la commande différée entraîne un élargissement de la zone angulaire (445) exposée à l'action des ultrasons et/ou dans lequel la commande différée entraîne une modification d'un angle d'irradiation aux ultrasons (440) moyen de la zone angulaire (445).

11. Procédé de vérification selon la revendication 7, dans lequel chacun des convertisseurs (201, 202, 203) est relié à un appareil à ultrasons (450) à canaux multiples ou plusieurs appareils à ultrasons (450) à un canal, dans lequel les appareils à ultrasons (450) transmettent des signaux à un ordinateur (470) à traitement de signal numérique par l'intermédiaire d'un réseau rapide, et en particulier dans lequel l'ordinateur (470) obtient d'un capteur de trajet (310) monté près de l'ensemble de convertisseur (200) des signaux pour une détection de trajet par l'intermédiaire d'une horloge interne (460).

12. Procédé de vérification selon l'une quelconque des revendications 7 à 11, dans lequel l'évaluation s'effectue par calcul de moyenne de signal à temps de propagation corrigé et addition en phase de points d'impact et/ou avec prise en compte d'une détection de trajet.
